# EUROPÄISCHE PATENTANMELDUNG

(11) **EP 1 182 855 A2**
(43) Veröffentlichungstag der Anmeldung: **27.02.2002**
(21) Anmeldenummer: 01118190.6
(22) Anmeldetag: 27.07.2001
(51) Int. Cl.: H04M 7/00

(54) **Verfahren und Vorrichtung zum Aufbauen einer Telefonverbindung**

(30) Priorität: 24.08.2000 DE 10041537
(71) Anmelder: Tenovis GmbH & Co. KG, 60326 Frankfurt am Main (DE)
(72) Erfinder: Rohrdrommel, Dieter, 63477 Maintal (DE); Schlesinger, Jürgen, 64572 Büttelborn (DE)
(74) Vertreter: Patentanwaltskanzlei WILHELM & BECK

(57) **Zusammenfassung**

Es wird ein Verfahren und eine Vorrichtung beschrieben, bei der eine Telefonverbindung zwischen einem Endgerät und einem über eine Internetleitung gewünschten Teilnehmer aufgebaut wird. Dabei werden die Daten zwischen dem Endgerät und dem gewünschten Teilnehmer nach dem Internet-Telefonieprotokoll ausgetauscht, wobei der Verbindungsaufbau über eine Vermittlungseinrichtung erfolgt ist.

## Beschreibung

Die Erfindung betrifft ein Verfahren gemäß dem Oberbegriff des Patentanspruchs 1 und eine Vorrichtung gemäß dem Oberbegriff des Patentanspruchs 5.

Telefonverbindungen werden üblicherweise über eine Vermittlungsstation zwischen zwei Endgeräten aufgebaut. Dabei werden beispielsweise Datenkanäle wie ISDN verwendet, um eine Punktzu-Punkt-Verbindung zur Übertragung von Sprache aufzubauen.

Aus WO 98/44713 ist ein Verfahren und eine Anordnung zum Verbinden eines Computers mit einer Telefonvermittlungsstation bekannt, bei der die Verbindung zwischen dem Computer und der Telefonvermittlungsstation über das Internet erfolgt und eine Telefonverbindung aufgebaut werden soll. In diesem Verfahren ist eine erste Recheneinheit über das Internet mit einer zweiten Recheneinheit verbunden und eine Bedienperson der ersten Recheneinheit betrachtet auf einer Anzeige beispielsweise eine Homepage, die von der zweiten Recheneinheit zur Verfügung gestellt wird. Auf der Homepage ist ein Button aktivierbar, mit dem ein Verbindungswunsch zu einem gewünschten Teilnehmer der zweiten Recheneinheit angezeigt wird. Aktiviert nun die erste Recheneinheit den Button, so gibt die zweite Recheneinheit eine Anfrage zum Aufbauen einer Telefonverbindung an die Vermittlungsstation weiter. Die Vermittlungsstation ermittelt aus dem Anfragesignal die Telefonnummer des gewünschten Teilnehmers und setzt die Daten, die nach dem Internet-Telefoniestandard übertragen werden, in entsprechende Datenformen wie z.B. unterschiedliche Protokolle im ISDN-Netzwerk um, um eine Verbindung zu einem Endgerät aufzubauen. In diesem Verfahren werden die Sprachdaten zwischen der ersten Recheneinheit und der Vermittlungsstation nach dem Internet-Telefoniestandard übertragen, von der Vermittlungsstation in ein Telefondatenprotokoll umgesetzt und an das entsprechende Endgerät, das beispielsweise als ISDN-Telefon ausgebildet ist, weitergeleitet.

Die Aufgabe der Erfindung besteht darin, ein vereinfachtes Verfahren und eine einfache Vorrichtung zum Aufbauen einer Telefonverbindung über das Internet bereitzustellen.

Die Aufgabe der Erfindung wird durch die Merkmale des Verfahrens nach Anspruch 1 und durch die Merkmale der Vorrichtung nach Anspruch 5 gelöst.

Ein wesentlicher Vorteil der Erfindung besteht darin, daß die Sprachdaten, die im Internet-Telefonieprotokoll ausgetauscht werden, nicht umgesetzt werden, sondern die Vermittlungsstation eine Internet-Telefonieverbindung zu dem gewünschten Teilnehmer aufbaut.

Weitere vorteilhafte Ausführungsformen sind in den abhängigen Ansprüchen angegeben.

Die Erfindung wird im Folgenden anhand der Figuren näher erläutert. Es zeigen:
- Fig. 1: schematisch eine Netzanordnung mit mehreren Recheneinheiten, wobei zwischen den Recheneinheiten eine Telefonverbindung nach einem Internet-Telefonieprotokoll aufgebaut wird und
- Fig. 2: einen schematischen Programmablauf zum Aufbau einer Internet-Telefonieverbindung.

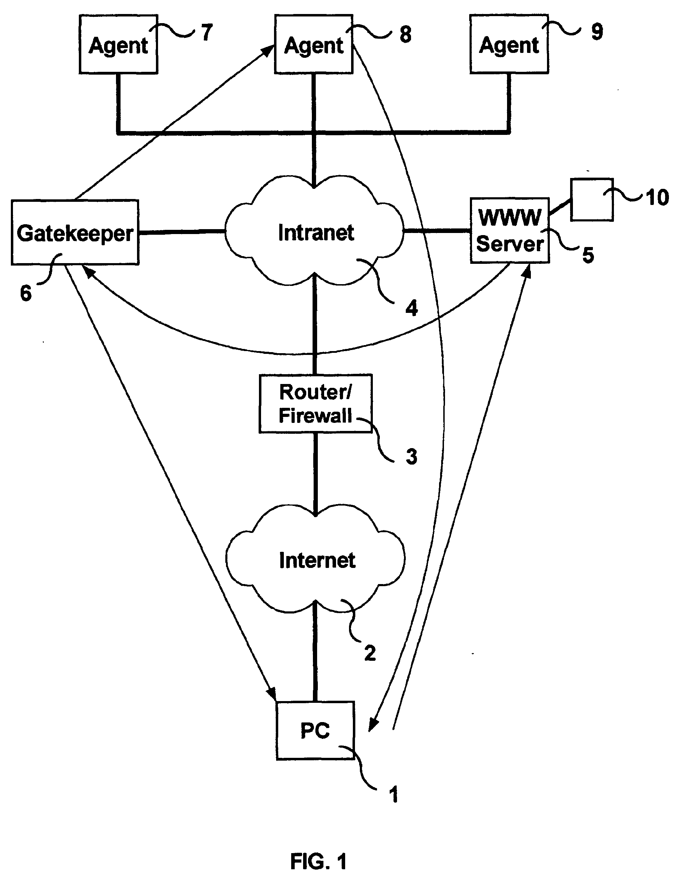

Fig. 1 zeigt ein erstes Endgerät 1, das beispielsweise als Personal Computer oder als internetfähiges Telefon ausgebildet ist. Das erste Endgerät 1 steht über ein erstes Netzwerk 2 mit einer Zugangsrecheneinheit 3 in Verbindung. Das erste Netzwerk 2 ist beispielsweise das Internet. Die Zugangsrecheneinheit 3 stellt einen Firewall-Rechner dar, der mit einem zweiten Netzwerk 4 verbunden ist und den Zugang zu dem zweiten Netzwerk 4 überwacht. Typischerweise überprüft der Firewall-Rechner 3 bei einem Verbindungswunsch in das zweite Netzwerk 4, ob das anfragende Gerät eine entsprechende Zugangsberechtigung für das zweite Netzwerk 4 aufweist. Zudem überwacht die Zugangsrecheneinheit 3 das Format der Datensignale, die in das zweite Netzwerk 4 transportiert werden sollen und filtert nicht zulässige Datenformate aus dem Datenstrom aus.

Das zweite Netzwerk 4 stellt beispielsweise ein Intranet dar, das mit einer zweiten Recheneinheit 5, einer dritten Recheneinheit 6 und einer vierten, fünften und sechsten Recheneinheit 7, 8, 9 in Verbindung steht.

Die zweite Recheneinheit 5 stellt beispielsweise einen World-Wide-Web-Server dar, auf dem Daten in einem Speicher 10 abgelegt sind, die über das Intranet und das Internet abgerufen werden können. Die dritte Recheneinheit 6 stellt einen Gate-Keeper dar, der ein zentrales Steuerelement für das Routen der Rufsignalisierung, die Auflösung der Telefonnummern und der IP-Adresse bzw. deren Umwandlung ist. Der Gate-Keeper ist für den Aufbau einer Verbindung zwischen zwei Endgeräten verantwortlich.

Die vierte, fünfte und sechste Recheneinheit 7, 8, 9 stellen so genannte Agenten dar, die beispielsweise als Personal Computer mit Mikrofon und Lautsprecher ausgebildet sind, um eine Telefonverbindung nach einem Internet-Telefoniedatenprotokoll aufbauen zu können.

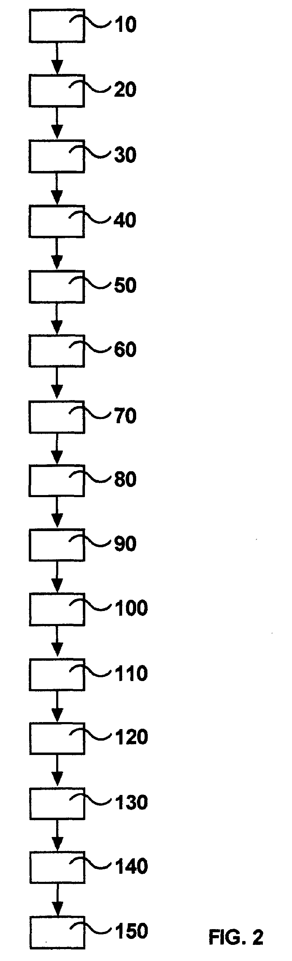

Fig. 2 zeigt ein Verfahren zum Aufbauen einer Telefonverbindung zwischen dem ersten Endgerät 1 und der vierten Recheneinheit 7.

Bei Programmpunkt 10 baut das erste Endgerät 1 eine Datenverbindung über das erste Netzwerk 2, die Zugangsrecheneinheit 3 und das zweite Netzwerk 4 zu der zweiten Recheneinheit 5 auf. Dazu verwendet das erste Endgerät 1 beispielsweise einen Internet-Browser, mit dem die Internet-Adresse der zweiten Recheneinheit 5 angewählt wird und beispielsweise eine Homepage von der zweiten Recheneinheit 5 zum ersten Endgerät 1 übertragen wird. Auf der Homepage ist ein Button dargestellt, bei dessen Betätigung der Wunsch zu einer Telefonverbindung mit einem gewünschten Teilnehmer angezeigt wird. Als gewünschter Teilnehmer ist beispielsweise ein Service-Zentrum einer Kundendienstfirma für Telefonanlagen vorgesehen.

Wünscht nun der Benutzer des ersten Endgerätes 1 eine Telefonverbindung zu dem Kundendienst, so betätigt der Benutzer über das erste Endgerät 1 den Button bei Programmpunkt 20.

Folglich wird beim folgenden Programmpunkt 30 ein entsprechendes Signal der zweiten Recheneinheit 5 angezeigt. Die zweite Recheneinheit 5 übergibt beim folgenden Programmpunkt 40 das Anfragesignal zum Aufbau einer Telefonverbindung mit dem Service-Zentrum an die dritte Recheneinheit 6.

Die dritte Recheneinheit 6 überprüft beim folgenden Programmpunkt 50, ob ein Endgerät 7, 8, 9 des Kundendienstes zur Annahme eines Telefonanrufes frei ist. Ist dies der Fall, so wird beim folgenden Programmpunkt 60 eine Datenverbindung mit dem ersten Endgerät 1 aufgebaut. Zum Aufbau der Datenverbindung verwendet die dritte Recheneinheit 6 einen CSTA-Dienst (Make Predictive Call), mit dem eine Telefonverbindung nach dem Standard des Internet-Telefonie-Datenprotokolls aufgebaut werden kann. Dabei sendet die dritte Recheneinheit 6 beim folgenden Programmpunkt 70 ein Abfragesignal (Setup) an das erste Endgerät 1.

Nach Erhalt des Anfragesignals antwortet das erste Endgerät 1 der dritten Recheneinheit 6 bei Programmpunkt 80 mit einem Antwortsignal (Admission Request), um die benötigte Bandbreite zur Übertragung der Sprachdaten festzulegen.

Nach Erhalt des Antwortsignales bestätigt die dritte Recheneinheit 6 mit einem Bestätigungssignal (Admission Confirm) die angeforderte Bandbreite oder schlägt einen neuen Wert für die Bandbreite vor. Das Bestätigungssignal wird bei Programmpunkt 90 zum ersten Endgerät 1 übertragen.

Anschließend sendet das erste Endgerät 1 beim folgenden Programmpunkt 100 ein Akzeptanzsignal (Alerting/Connect) , mit dem die Bereitschaft des ersten Endgerätes 1 zum Aufbau einer Telefonie-Datenverbindung an die dritte Recheneinheit 6 übertragen wird. Damit ist der Verbindungsaufbau zum ersten Endgerät 1 abgeschlossen und die dritte Recheneinheit 6 startet bei Programmpunkt 110 den Verbindungsaufbau zu dem freien Endgerät des Service-Zentrums, das in diesem Ausführungsbeispiel durch die vierte Recheneinheit 7 dargestellt wird.

Beim folgenden Programmpunkt 120 sendet die dritte Recheneinheit 6 ein Anfragesignal (Setup) an die vierte Recheneinheit 7. Die vierte Recheneinheit 7 antwortet beim folgenden Programmpunkt 130 mit einem Antwortsignal (Admission Request), um die benötigte Bandbreite festzulegen. Anschließend sendet die dritte Recheneinheit 6 bei Programmpunkt 140 ein Bestätigungssignal (Admission Confirm) an die vierte Recheneinheit 7, um die angeforderte Bandbreite zu bestätigen oder um einen neuen Wert für die Bandbreite vorzuschlagen.

Beim folgenden Programmpunkt 150 sendet die vierte Recheneinheit 7 ein Akzeptanzsignal (Alerting/Connect) an die dritte Recheneinheit 6, um den Abschluss des Verbindungsaufbaus der dritten Recheneinheit 6 anzuzeigen. Damit ist die Verbindung zwischen dem ersten Endgerät 1 und der vierten Recheneinheit 7 durchgeschaltet. Die Sprachdaten werden anschließend direkt zwischen dem ersten Endgerät 1 und der vierten Recheneinheit 7 ausgetauscht.

Grundsätzlich basiert die Datenübertragung auf dem H.323-Protokoll, wobei zur Signalisierung das Q.931-Protokoll verwendet und zur Aushandlung der Endgerätefunktionalität das H.245-Protokoll eingesetzt wird. Die Signalisierungsphase und der Aufbau der Datenverbindung wird über das Transmission Control Protocol (TCP) abgearbeitet.

Der Austausch der Sprachdaten erfolgt vorzugsweise über das User-Datagramm-Protokoll (UDP).

In einer weiteren Ausführungsform der Erfindung baut die dritte Recheneinheit 6 zuerst eine Datenverbindung zu dem gewünschten Teilnehmer, d.h. in dem beschriebenen Ausführungsbeispiel zu der vierten Recheneinheit 7, und anschließend die Datenverbindung zu dem ersten Endgerät 1 auf.

Ein wesentlicher Vorteil der Erfindung besteht darin, daß zum Aufbau einer Telefonverbindung keine Umsetzung der Daten in ein anderes Datenprotokoll notwendig ist, um einen gewünschten Teilnehmer zu erreichen.

## Patentansprüche

1. Verfahren zum Aufbauen einer Telefonverbindung über eine Datenleitung,
wobei von einem Endgerät (1) über die Datenleitung (2) an eine Recheneinheit (5) ein Signal zum Aufbauen einer Telefonverbindung zu einem gewünschten Teilnehmer übermittelt wird,
wobei die Recheneinheit (5) den Verbindungswunsch an eine Vermittlungsstation weiterleitet,
**dadurch gekennzeichnet,**
**daß** die Vermittlungsstation als weitere Recheneinheit (6) ausgebildet ist, und
**daß** von der weiteren Recheneinheit (6) eine Datenverbindung zwischen dem Endgerät (1) und dem gewünschten Teilnehmer (7) nach einem Internet-Telefonie-Datenprotokoll aufgebaut wird.

2. Verfahren nach Anspruch 1, **dadurch gekennzeichnet, daß** von der weiteren Recheneinheit (6) zuerst eine Internet-Telefonieverbindung mit dem Endgerät (1) vorbereitet wird, und
daß von der weiteren Recheneinheit (6) anschließend eine Internet-Telefonieverbindung mit dem gewünschten Teilnehmer (7) vorbereitet wird und daß abschließend die Internet-Telefonie-Verbindung zwischen dem Endgerät (1) und dem Teilnehmer (7) durchgeschaltet wird.

3. Verfahren nach einem der Ansprüche 1 oder 2, **dadurch gekennzeichnet,**
**daß** von der weiteren Recheneinheit (6) ein Setup-Signal an das Endgerät (1) gesendet wird,
**daß** von dem Endgerät (1) ein Antwortsignal zur Festlegung der Bandbreite an die weitere Recheneinheit (6) gesendet wird, und
**daß** von der weiteren Recheneinheit (6) ein Antwortsignal an das Endgerät (1) gesendet wird, in dem die Bandbreite akzeptiert oder eine neue Bandbreite vorgeschlagen wird, daß von dem Endgerät (1) ein Akzeptanzsignal zur weiteren Recheneinheit (6) gesendet wird, mit dem das Endgerät (1) die Datenverbindung akzeptiert.

4. Verfahren nach einem der Ansprüche 1 bis 3, **dadurch gekennzeichnet,**
**daß** von der weiteren Recheneinheit (6) ein Setup-Signal an den gewünschten Teilnehmer (7) gesendet wird,
**daß** von dem gewünschten Teilnehmer (7) ein Antwortsignal zur Festlegung der Bandbreite an die weitere Recheneinheit (6) gesendet wird,
**daß** von der zweiten Recheneinheit (6) ein Antwortsignal an den gewünschten Teilnehmer gesendet wird, in dem die Bandbreite akzeptiert oder eine neue Bandbreite vorgeschlagen wird, und
**daß** von dem gewünschten Teilnehmer (7) ein Akzeptanzsignal zur weiteren Recheneinheit (6) gesendet wird, mit dem der Teilnehmer (7) die Datenverbindung akzeptiert.

5. Vorrichtung zum Aufbauen einer Telefonverbindung über eine Datenleitung, wobei eine Recheneinheit (3, 4, 5, 6) eine Schnittstelle aufweist, mit der ein Anfragesignal zu einer Telefonverbindung zu einem gewünschten Teilnehmer (7, 8, 9) empfangen werden kann,
**dadurch gekennzeichnet,**
**daß** die Recheneinheit (3, 4, 5, 6) eine Datenverbindung zu dem gewünschten Teilnehmer (7, 8, 9) nach einem Internet-Telefonie-Datenprotokoll aufbaut, wenn das entsprechende Anfragesignal erhalten wird.

6. Vorrichtung nach Anspruch 5, **dadurch gekennzeichnet,**
**daß** die Recheneinheit (3, 5) mit einer dritten Recheneinheit (6) verbunden ist,
**daß** die Recheneinheit (5) der dritten Recheneinheit (6) einen Auftrag zum Aufbauen einer Telefonverbindung erteilt, und
**daß** die dritte Recheneinheit (6) eine Telefonverbindung zu dem gewünschten Teilnehmer (7, 8, 9) aufbaut.
